# FASCICULE DE BREVET EUROPEEN

(11) **EP 4 441 493 B1**
(45) Date de publication et mention de la délivrance du brevet: **04.02.2026**
(21) Numéro de dépôt: 22834689.6
(22) Date de dépôt: 01.12.2022
(51) Int. Cl.: G01N 23/046

(54) **PROCÉDÉ D'ANALYSE TOMOGRAPHIQUE**
TOMOGRAPHISCHES ANALYSEVERFAHREN
TOMOGRAPHIC ANALYSIS METHOD

(30) Priorité: 03.12.2021 FR 2112964
(43) Date de publication de la demande: 09.10.2024
(73) Titulaire: SAFRAN AIRCRAFT ENGINES, 75015 Paris (FR)
(72) Inventeur: DUCHENE, Pierre Alfred Jean, 77550 MOISSY-CRAMAYEL (FR); CELESTIN, Harmonie, 77550 MOISSY-CRAMAYEL (FR)
(74) Mandataire: Ernest Gutmann - Yves Plasseraud S.A.S.
(86) Numéro de dépôt international: PCT/FR2022/052210
(87) Numéro de publication internationale: WO 2023/099846

(56) Documents cités:
- FR-A1- 3 050 826
- US-A1- 2009 066 939
- DAKAK ABDEL RAHMAN ET AL: "Application des algorithmes d'intelligence artificielle ä l'exploitation des données de tomographie de pièces de fonderie en alliage d'aluminium", LA REVUE FORGE ET FONDERIE, vol. 26, June 2021 (2021-06-01), pages 18 - 25, XP055965777, Retrieved from the Internet <URL:https://www.ctif.com/fichiers/2021/07/ForgeFonderie26-pp18-25.pdf> [retrieved on 20220928]
- DAKAK ABDEL RAHMAN ET AL: "Tomographie X et deep-learning", 28 November 2019 (2019-11-28), XP055965866, Retrieved from the Internet <URL:https://www.ingenierie-at-lyon.org/wp-content/uploads/2019/09/CND_Innovants_TOMOGRAPHIE_V1.pdf> [retrieved on 20220928]
- FUCHS PATRICK ET AL: "Defect detection in CT scans of cast aluminum parts: A machine vision perspective", NEUROCOMPUTING, vol. 453, 29 April 2021 (2021-04-29), AMSTERDAM, NL, pages 85 - 96, XP055971871, ISSN: 0925-2312, DOI: 10.1016/j.neucom.2021.04.094

## Description

### Domaine technique de l'invention

L'invention concerne un procédé d'analyse tomographique d'une pièce mécanique. La pièce fait par exemple partie d'un aéronef, et plus précisément d'une turbomachine, comme une partie d'un carter de soufflante, une aube de soufflante, ou une partie d'une structure d'aubages fixes.

### Etat de la technique antérieure

Il est connu d'inspecter les pièces mécaniques structurelles par des méthodes de tomographie, par exemple radiographique ou acoustique, afin de détecter la présence d'éventuels défauts en surface et à l'intérieur de la pièce.

Ces méthodes sont fiables, non-invasives et permettent d'inspecter l'intérieur des pièces, ce qui permet de statuer rapidement sur l'état de la pièce et décider de sa potentielle remise en fonctionnement ou son remplacement.

Une mesure tomographique consiste en un balayage d'un objet observé, ici une pièce mécanique, au moyen d'un faisceaux d'ondes, et en une mesure du faisceau transmis dans toutes les directions afin de reconstituer une image tridimensionnelle de l'objet.

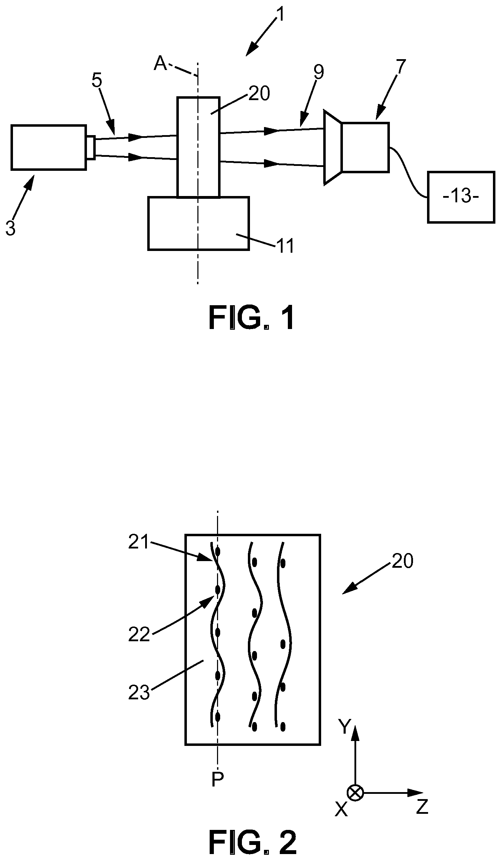

La figure 1 illustre un dispositif de tomographie 1 pendant l'inspection d'une pièce mécanique 20.

Le dispositif de tomographie 1 comprend au moins un dispositif d'émission 3, configuré pour émettre un faisceau incident 5 d'impulsions d'ondes en direction de la pièce 20, par exemple des ondes radiofréquence, des rayons X ou encore des ondes acoustiques, et un moins un récepteur 7 aptes à capter un faisceau transmis 9 d'ondes, agencés de part et d'autre de la pièce 20.

La pièce 20 est généralement montée sur un support 11 rotatif autour d'un axe A, afin d'être observée sous toutes les directions pendant la mesure tomographique.

La pièce 20 observée par tomographie peut être constituée d'un matériau composite, tel que représenté en détail sur la figure 2, ou bien d'un matériau métallique.

Un tel matériau composite comprend des fibres de trames 21 et des fibres de chaines 22 tissées les unes avec les autres sur un plan de tissage P, ou plusieurs plans de tissage P superposés selon une direction d'épaisseur Z.

Les fibres 21 et 22 peuvent être des fibres de carbone, de verre ou un mélange des deux. Elles sont noyées dans une matrice 23 comprenant par exemple un ou plusieurs polymères et/ou résines, qui se solidifient pour former la pièce 20 définitive.

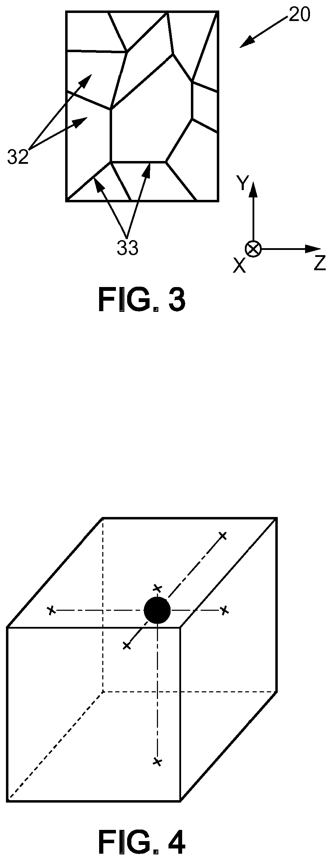

Dans le cas d'un matériau métallique, il peut être défini à l'échelle mésoscopique comme un ensemble de grains de matière 32 liés entre eux par des joints de grain 33, comme représenté sur la figure 3. Ces grains 32 sont des domaines tridimensionnels qui peuvent avoir des formes diverses et variées, avec une direction ou une orientation privilégiée sur l'étendue du grain 32, ce qui peut mener à un matériau métallique orthotrope.

Les amplitudes des ondes transmises sous les différents angles d'observations sont traduites en niveaux de gris dans un dispositif de traitement 13, et une analyse numérique permet de reconstituer le volume de la pièce 20. Le dispositif de traitement 13 comprend un ordinateur. L'analyse par tomographie permet alors d'obtenir un visuel sur l'extérieur et l'intérieur de la pièce. Ce type de contrôle présente l'avantage majeur de permettre la visualisation dans l'épaisseur du matériau et de la pièce étudiée, tout en étant non-destructif et fiable.

Un opérateur humain peut alors évaluer la qualité de la pièce, en recherchant dans l'image tridimensionnelle la présence ou l'absence d'une anomalie ou d'un dégât.

Dans ce qui suit, les termes « non-conformité », « anomalie », « dégât », « endommagement » ou équivalents sont utilisés indifféremment pour désigner une partie de la pièce où les propriétés mécaniques de la pièce sont localement dégradées par rapport à celles d'une pièce en bon état.

Il peut également s'agir de la présence d'un corps étranger dans le matériau, comme un vide (porosité) ou un matériau arrivé par erreur dans la pièce lors de sa mise en forme. Une telle anomalie peut justifier un retrait et un remplacement de la pièce lorsque sa tenue mécanique est compromise, ou, selon les cas, peut ne pas s'opposer au bon fonctionnement de la pièce. Dans le cas d'un matériau composite, il peut également s'agir d'une zone où les fibres 21, 22 sont distendues ou rompues.

Dans le cas d'un matériau métallique il peut à nouveau s'agir de zone présentant des porosités ou un corps étranger, des joints de qualité moindre affectants les caractéristiques mécaniques ou des tailles de grains atypiques.

Il est important de noter que la détection et caractérisation de la taille et de la forme de l'anomalie est toujours laissée actuellement à l'opérateur humain. Cette étape génère un délai important car il est nécessaire de bien définir la zone non-conforme et qu'une observation de l'ensemble du volume de la pièce est nécessaire actuellement pour détecter toutes les éventuelles anomalies.

Un autre procédé d'analyse tomographique est décrit dans Dakak Abdel Rahman et al.: "Application des algorithmes d'intelligence artificielle à l'exploitation des données de tomographie de pièces de fonderie en alliage d'aluminium", La revue Forge et Fonderie, vol. 26, juin 2021, pages 18-25, XP055965777.

### Présentation de l'invention

L'invention vise à remédier à ces inconvénients, en fournissant une méthode d'analyse permettant une détection rapide de potentielles anomalies sans nécessiter l'intervention d'un opérateur, et sans risquer d'ignorer une potentielle anomalie.

A cet effet, l'invention a pour objet un procédé d'analyse tomographique d'une pièce pour détecter des anomalies, le procédé comprenant les étapes suivantes :
- acquisition d'au moins une image tridimensionnelle de la pièce au moyen d'un dispositif de tomographie,
- subdivision de l'image en sous-parties élémentaires,
- analyse d'une distribution de niveaux de gris dans chaque sous-partie et obtention d'au moins un paramètre représentatif de ladite distribution de niveaux de gris pour chaque sous-partie,
- comparaison du ou des paramètres obtenus pour chaque sous-partie avec des plages de valeurs standard caractéristique d'une région saine et détection de sous-parties anormales dont le ou les paramètres sont hors des plages de valeurs standard,
- détermination de régions à risque, comprenant chaque sous-partie anormale et chaque sous-partie voisine d'au moins une sous-partie anormale, et
- analyse des régions à risques pour détecter les anomalies dans la pièce.

Un tel procédé permet de détecter les anomalies dans une pièce de manière fiable et non-invasive, avec un temps d'intervention réduit pour l'opérateur pendant l'étape d'analyse des régions à risque, sans augmenter le risque de rater une anomalie.

L'étape de subdivision peut comprendre la détermination d'au moins une dimension standard des anomalies recherchée dans la pièce, chaque sous-partie présentant des dimensions comprises entre la moitié de la dimension standard et le double de la dimension standard.

La dimension standard est par exemple obtenue à partir de résultats de tests précédents stockés sur une base de données.

Les dimensions des sous-parties peuvent comprendre une hauteur, une largeur, une longueur de la sous-partie.

Alternativement, chaque sous-partie peut présenter des dimensions supérieures au double de la dimension standard.

Une telle caractéristique permet d'optimiser la taille de la région à risque étudiée en fonction des anomalies à considérer.

Au moins un des paramètres représentatifs de la distribution de niveau de gris peut être choisi parmi la moyenne, le maximum et le minimum de la distribution de niveaux de gris sur la sous-partie.

Au moins un des paramètres représentatifs de la distribution de niveau de gris peut être choisi parmi le gradient, le rotationnel et la divergence de la distribution de niveaux de gris sur la sous-partie.

L'étape de comparaison peut mettre en oeuvre au moins un outil de traitement numérique choisi parmi une analyse de voisins les plus proches, une analyse d'arbre de classification, une analyse par machine à vecteur support et une analyse à réseaux de neurones.

Alternativement, l'étape de comparaison peut consister en la comparaison de la valeur mesurée avec une plage de valeurs standard caractéristique d'une région saine, pour déterminer si la valeur mesurée est dans ladite plage ou non.

La plage de valeurs standard caractéristique d'une valeur saine peut être une plage centrée sur une valeur moyenne standard et d'une amplitude par exemple égale à 10% de cette valeur moyenne standard.

La pièce peut comprendre un matériau composite tissé.

Le matériau composite peut être tissé selon un motif bidimensionnel. Un tel matériau comprend des fibres de chaine et des fibres de trame tissées entre elles pour former au moins un plan de tissage, lesdites fibres étant noyées dans une matrice.

Les fibres peuvent se présenter sous la forme de plans de tissages indépendants et préimprégnés avec la matrice non-durcie, et déposés les uns sur les autres.

Alternativement, tous les plans de tissage peuvent être mis en place, par exemple dans un moule, avant l'injection de la matrice non-durcie.

Alternativement, le matériau composite peut être tissé selon un motif tridimensionnel, avec des fibres s'étendant selon au moins trois directions non coplanaires, noyées dans une matrice comme plus haut. Un tel matériau est également connu sous la désignation « *interlock* »*.*

Les fibres du matériau composite tissé peuvent comprendre des fibres de verre et/ou des fibres de carbone.

La matrice peut comprendre au moins un polymère, notamment un polymère thermodurcissable, et/ou au moins une résine.

La pièce peut comprendre un matériau métallique.

La pièce peut être une pièce de carter de turbomachine, ou une aube de rotor de compresseur, de stator ou de soufflante d'une turbomachine.

### Brève description des figures

[Fig. 1] la figure 1 est une vue schématique de côté d'un dispositif de tomographie au cours de la mise en oeuvre d'un procédé selon l'invention,
[Fig. 2] la figure 2 est une vue schématique de détail d'une pièce en matériau composite tissé,
[Fig. 3] la figure 3 est une vue schématique de détail d'une pièce en matériau métallique,
[Fig. 4] la figure 4 est une vue schématique d'une image tridimensionnelle d'une pièce comprenant une anomalie,
[Fig. 5] la figure 5 est une vue schématique d'une étape de subdivision de l'image tridimensionnelle de la figure 4, et
[Fig. 6] la figure 6 est une vue schématique d'une étape d'analyse des subdivisions de la figure 5.

### Description détaillée de l'invention

Un procédé d'analyse tomographique selon l'invention va maintenant être décrit. Ce procédé met en oeuvre le dispositif d'analyse 1 décrit précédemment, et vise à détecter la présence d'anomalies dans une pièce 20, réalisée par exemple en matériau composite ou en matériau métallique.

Le procédé comprend une première étape d'acquisition d'au moins une image tridimensionnelle de la pièce 20 au moyen du dispositif de tomographie 1.

Un faisceau incident 5 d'impulsions d'ondes est émis par le dispositif d'émission 3, en direction de la pièce 20. Le faisceau incident 5 est par exemple un faisceau d'ondes radiofréquences.

Les ondes traversent la pièce 20, et un faisceau transmis 9 issu de la pièce 20 est capté par le récepteur 7. La distribution d'intensité du faisceau transmis 9 obtenue est convertie en une image bidimensionnelle en niveaux de gris de la pièce 20 par le dispositif de traitement 13.

La pièce 20 est mise en rotation au moyen du support 11, et des images bidimensionnelles de la pièce 20 sont acquise sous toutes les directions.

Une image tridimensionnelle de la pièce 20 en niveaux de gris, ou image tomographique, est alors reconstituée par traitement d'image au moyen du dispositif de traitement 13.

Dans l'exemple décrit, la pièce 20 est une pièce en matériau composite, telle que représentée sur la figure 2.

Le matériau composite comprend des fibres de trames 21 s'étendant selon une direction de trame X et des fibres de chaînes 22 s'étendant selon une direction de chaîne Y, noyées dans une matrice 23. L'écart moyen entre deux fibres de trame 21 ou de chaîne 22 voisines est de l'ordre de 2 mm.

Une épaisseur de la pièce 20, mesurée selon une direction d'épaisseur Z, est par exemple compris entre 5 et 25 mm, notamment proche de 10 mm pour une pièce 20 comprenant quatre à huit plans de plans de tissage superposés.

Les fibres de trames 21 et chaînes 22 peuvent être de matériaux identiques ou différents (verre ou carbone).

La matrice 23 comprend au moins un polymère organique et/ ou au moins une résine.

Les matériaux composites tissés peuvent être considérés comme des matériaux orthotropes, c'est-à-dire de matériaux possédant trois plans de symétrie au niveau de leur microstructure interne.

Alternativement, la pièce 20 est composée d'un matériau métallique constitué de grains métalliques 32 et comprenant des joints 33 entre ces grains 32. Une épaisseur de la pièce mesurée selon la direction Z est par exemple comprise entre 2 et 25 mm, notamment proche de 7,5 mm. Le matériau métallique peut être isotrope ou orthotrope selon sa microstructure interne.

Le procédé d'analyse comprend une étape de détermination des dimensions standard des anomalies recherchées dans la pièce 20.

Les dimensions standards dépendent de la nature du matériau, ainsi que du seuil de dégradation acceptable dans la pièce 20.

Par exemple, dans une pièce 20 destinée au domaine aéronautique, des anomalies trop petites n'entrainent pas une dégradation suffisante des propriétés mécaniques de la pièce 20 pour être prises en compte.

Un exemple de dimensions standard des anomalies est de 1 mm selon les trois directions X, Y, Z.

Le procédé comprend ensuite une étape de subdivision de l'image tridimensionnelle en sous-partie élémentaires.

Une telle image tridimensionnelle 25 subdivisée en sous-parties élémentaires 27 est représentée schématiquement sur la figure 4, dans laquelle la pièce 20 comprend une anomalie 30.

Les sous-parties élémentaires 27 sont par exemple cubiques, avec une taille de côté D égale à la dimension standard des anomalies recherchées.

Alternativement, la taille de côté D des sous-parties 27 est supérieure à la dimension standard des anomalies recherchées, notamment deux fois supérieure.

Le procédé comprend une étape d'analyse de la distribution de niveaux de gris dans chaque sous-partie 27 et de détermination d'une valeur d'au moins un paramètre représentatif de cette distribution pour chaque sous-partie 27.

Des exemples de paramètres représentatifs sont : la moyenne des niveaux de gris, le niveau maximum, le niveau minimum mais également des opérateurs mathématiques plus complet comme le gradient moyen de niveau de gris sur la sous-partie 27, ou encore le rotationnel et la divergence du niveau de gris sur la sous-partie 27. Ces paramètres permettent une description rapide des distributions de niveaux de gris dans chaque sous-parties 27.

Le procédé comprend ensuite une étape de comparaison, au cours de laquelle les valeurs de chaque paramètre représentatif obtenu pour chaque sous-partie 27 sont comparées avec les valeurs connues correspondant à des sous-parties connues comme sans anomalies.

Cette étape de comparaison peut consister en une simple vérification des valeurs du paramètre étudié par rapport à une plage de valeurs identifiées sur les zones saines du matériau, ou en une analyse plus poussée de classification.

Dans le cas d'une analyse de classification, des outils de traitement numérique dédiés comme les analyses de voisins les plus proches, d'arbres de classification, peuvent être utilisées. Si le volume de données est suffisant, une analyse par machine de support de vecteur ou de réseaux de neurones peut être mise en oeuvre.

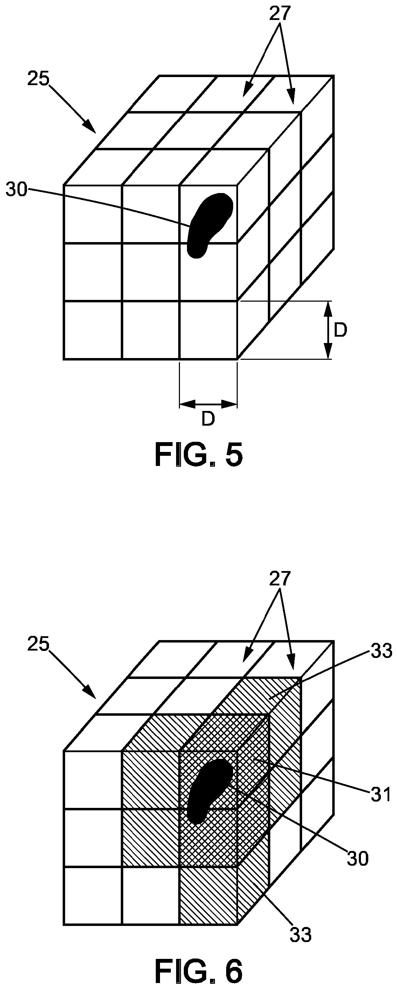

L'étape de comparaison permet alors la détermination de sous-parties anormales 31, pour lesquels les valeurs des paramètres représentatifs diffèrent des valeurs identifiées sur les zones saines. Les sous-parties anormales 31 sont représentées sur la figure 6 avec des hachures en croisillons.

Le procédé comprend alors une étape de détermination de régions à risques, comprenant tous les sous-parties anormales 31, ainsi que chaque sous-partie 33 voisines directes d'au moins une sous-partie anormale 31.

Les sous-partie 33 voisines directes d'au moins une sous-partie anormale 31 sont marquées avec des hachures simples sur la figure 6.

De cette façon, la région à risque est identifiée avec une marge autour des sous-parties anormales identifiées, afin de ne pas rater d'anomalie.

Les sous-parties 27 ne faisant pas partie d'une région à risque sont écartées et classifiées en zone saine.

Les régions à risque sont alors inspectées manuellement par un opérateur, pour détecter les anomalies dans la pièce, alors que les zones saines ne sont pas inspectées, réduisant ainsi le temps d'intervention d'un opérateur qualifié.

## Revendications

1. Procédé d'analyse tomographique d'une pièce (20) pour détecter des anomalies (30), le procédé comprenant les étapes suivantes :
- acquisition d'au moins une image (25) tridimensionnelle de la pièce (20) au moyen d'un dispositif de tomographie (1),
- subdivision de l'image (25) en sous-parties (27) élémentaires, et étant **caractérisé par** les étapes suivantes :
- analyse d'une distribution de niveaux de gris dans chaque sous-partie (27) et obtention d'au moins un paramètre représentatif de ladite distribution de niveaux de gris pour chaque sous-partie (27),
- comparaison du ou des paramètres obtenus pour chaque sous-partie (27) avec des valeurs standard caractéristiques d'une région saine et détection de sous-parties anormales (31) dont le ou les paramètres diffèrent des valeurs standard,
- détermination de régions à risque, comprenant chaque sous-partie anormale (31) et chaque sous-partie voisine (33) d'au moins une sous-partie anormale, et
- analyse des régions à risques pour détecter les anomalies (30) dans la pièce (20).

2. Procédé selon la revendication 1, dans lequel l'étape de subdivision comprend la détermination d'au moins une dimension standard des anomalies (30) recherchée dans la pièce (20), chaque sous-partie (27) présentant des dimensions comprises entre la moitié de la dimension standard et le double de la dimension standard.

3. Procédé selon l'une des revendications précédentes, dans lequel au moins un des paramètres représentatifs de la distribution de niveau de gris est choisi parmi la moyenne, le maximum et le minimum de la distribution de niveaux de gris sur la sous-partie (27).

4. Procédé selon l'une des revendications précédentes, dans lequel au moins un des paramètres représentatifs de la distribution de niveau de gris est choisi parmi le gradient, le rotationnel et la divergence de la distribution de niveaux de gris sur la sous-partie (27).

5. Procédé selon l'une des revendications précédentes, dans lequel l'étape de comparaison met en oeuvre au moins un outil de traitement numérique choisi parmi une analyse de voisins les plus proches, une analyse d'arbre de classification, une analyse par machine à vecteur support et une analyse à réseaux de neurones.

6. Procédé selon l'une des revendications précédentes, dans lequel la pièce (20) comprend un matériau composite tissé.

7. Procédé selon l'une des revendications précédentes, dans lequel la pièce (20) comprend un matériau métallique.

8. Procédé selon l'une des revendications précédentes, dans lequel la pièce (20) est une pièce de carter de turbomachine, ou une aube de rotor de compresseur, de stator ou de soufflante d'une turbomachine.

## Patentansprüche

1. Verfahren zur tomografischen Analyse eines Werkstücks (20) zum Erkennen von Anomalien (30),
wobei das Verfahren die folgenden Schritte umfasst:
- Erfassen mindestens eines dreidimensionalen Bildes (25) des Werkstücks (20) mittels einer Tomografievorrichtung (1),
- Unterteilen des Bildes (25) in einzelne Unterabschnitte (27),
und durch folgende Schritte gekennzeichnet ist:
- Analysieren einer Graustufenverteilung in jedem Unterabschnitt (27) und Erhalten mindestens eines für die Graustufenverteilung repräsentativen Parameters für jeden Unterabschnitt (27),
- Vergleichen des oder der für jeden Unterabschnitt (27) erhaltenen Parameter mit charakteristischen Standardwerten eines intakten Bereichs und Erkennen anormaler Unterabschnitte (31), bei denen der bzw. die Parameter von den Standardwerten abweichen,
- Bestimmen von Gefahrenbereichen, umfassend jeweils den anormalen Unterabschnitt (31) und den dem mindestens einen anormalen Unterabschnitt benachbarten Unterabschnitt (33), und
- Analysieren der Gefahrenbereiche zum Erkennen von Anomalien (30) in dem Werkstück (20).

2. Verfahren nach Anspruch 1,
wobei der Schritt des Unterteilens das Bestimmen mindestens einer Standardabmessung von Anomalien (30) in dem untersuchten Werkstück (20) umfasst, wobei der Unterabschnitt (27) jeweils Abmessungen zwischen der halben Standardabmessung und der zweifachen Standardabmessung aufweist.

3. Verfahren nach einem der vorstehenden Ansprüche,
wobei mindestens einer der für die Graustufenverteilung repräsentativen Parameter aus dem Mittelwert, dem Höchstwert und dem Mindestwert der Graustufenverteilung an dem Unterabschnitt (27) ausgewählt wird.

4. Verfahren nach einem der vorstehenden Ansprüche,
wobei mindestens einer der für die Graustufenverteilung repräsentativen Parameter aus dem Gradienten, der Rotation und der Divergenz der Graustufenverteilung an dem Unterabschnitt (27) ausgewählt wird.

5. Verfahren nach einem der vorstehenden Ansprüche,
wobei bei dem Schritt des Vergleichens mindestens ein digitales Verarbeitungsmittel, ausgewählt aus einer Nächste-Nachbarn-Analyse, einer Klassifikationsbaumanalyse, einer Support-Vektor-Maschinen-Analyse und einer Neuronennetz-Analyse, verwendet wird.

6. Verfahren nach einem der vorstehenden Ansprüche,
wobei das Werkstück (20) ein gewebtes Verbundmaterial enthält.

7. Verfahren nach einem der vorstehenden Ansprüche,
wobei das Werkstück (20) ein metallisches Material enthält.

8. Verfahren nach einem der vorstehenden Ansprüche,
wobei das Werkstück (20) ein Triebwerksgehäuseteil, eine Rotorschaufel eines Verdichters oder eine Stator- oder Gebläseschaufel eines Triebwerks ist.

## Claims

1. Method for the tomographic analysis of a part (20) in order to detect anomalies (30), the method comprising the following steps:
- acquiring at least one three-dimensional image (25) of the part (20) by means of a tomography device (1),
- subdividing the image (25) into elementary subparts (27), and being **characterized by** the following steps:
- analyzing a grayscale distribution in each subpart (27) and obtaining at least one parameter representative of said grayscale distribution for each subpart (27),
- comparing the one or more parameters obtained for each subpart (27) with standard values characteristic of a defect-free region and detecting abnormal subparts (31) for which the one or more parameters differ from the standard values,
- determining risk regions, which comprise each abnormal subpart (31) and each subpart (33) adjacent to at least one abnormal subpart, and
- analyzing the risk regions in order to detect the anomalies (30) in the part (20).

2. Method according to claim 1, wherein the subdividing step comprises determining at least one standard dimension of the anomalies (30) being looked for in the part (20), each subpart (27) having dimensions between half the standard dimension and double the standard dimension.

3. Method according to one of the preceding claims, wherein at least one of the parameters representative of the grayscale distribution is chosen among the average, the maximum, and the minimum in the grayscale distribution for the subpart (27).

4. Method according to one of the preceding claims, wherein at least one of the parameters representative of the grayscale distribution is chosen among the gradient, the divergence, and the curl of the grayscale distribution for the subpart (27).

5. Method according to one of the preceding claims, wherein the comparison step makes use of at least one digital processing tool chosen among nearest neighbor analysis, classification tree analysis, support vector machine analysis, and neural network analysis.

6. Method according to one of the preceding claims, wherein the part (20) comprises a woven composite material.

7. Method according to one of the preceding claims, wherein the part (20) comprises a metal material.

8. Method according to one of the preceding claims, wherein the part (20) is a turbomachine casing part, or a blade of a compressor rotor or stator or of a fan of a turbomachine.
